# EUROPEAN PATENT APPLICATION

(11) **EP 4 465 292 A1**
(43) Date of publication of application: **20.11.2024**
(21) Application number: 24174436.6
(22) Date of filing: 07.05.2024
(51) Int. Cl.: G10K 11/175, E03F 7/00

(54) **AN APPARATUS FOR A STRUCTURE CONVEYING WASTEWATER**

(30) Priority: 15.05.2023 SE 2350585
(71) Applicant: ISG Nordic AB, 168 67 Bromma (SE)
(72) Inventor: JOHANSSON, Mikael, 262 57 Ängelholm (SE); GUSTAVSSON, Mats Olle, 252 50 Helsingborg (SE)
(74) Representative: Ehrner & Delmar Patentbyrå AB

(57) **Abstract**

An apparatus (100) comprising a membrane (102) for at least partly covering an opening (202) formed by a structure (200) forming a space (204) for conveying wastewater, wherein the opening (202) opens to the space (204). The apparatus (100) comprises one or more sealings (104) for sealing between the membrane (102) and the structure (200). The apparatus (100) comprises an exciter (106) for inducing vibrations in the membrane (102). The exciter (106) and membrane (102) are configured to produce sound in the space (204) so as to mask human voices in the space (204). Further, a method (400) for producing sound in a space (204) for conveying wastewater.

## Description

### Technical field

Aspects of the present invention relate to an apparatus for a structure for conveying wastewater.

### Background

In general, detention or custody cells and prison cells are provided with a basin and/or a toilet to be used by the detained or imprisoned person, wherein the basin and toilet are connected to a pipe system for conveying wastewater from the basin and toilet.

### Summary

The inventors of the present invention have found drawbacks in conventional solutions for conveying wastewater from a basin or toilet, for example, located in a custody or prison cell. The inventors of the present invention have found that pipe systems associated with the toilet and/or basin located in the detention (or custody, or prison) cell may be used for communication between detained or imprisoned persons placed in separate cells. For example, the inventors of the present invention have found that the water lock of a toilet or basin of conventional wastewater pipe systems may be completely or partly emptied and allow for detained or imprisoned persons to communication with one another via the pipes of the pipe system. Sometimes, there are restrictions for detained or imprisoned persons to communicate with others, for example, so as not to interfere with an ongoing investigation.

An object of the invention is to provide a solution which mitigates or solves the drawbacks and problems of conventional solutions.

The above and further objects are solved by the subject matter of the independent claims. Further advantageous embodiments of the invention can be found in the dependent claims.

According to a first aspect of the invention, the above mentioned and other objects are achieved with an apparatus comprising
a membrane for at least partly covering an opening formed by a structure forming a space for conveying wastewater, wherein the opening opens to the space,
one or more sealings for sealing between the membrane and the structure, and
an exciter for inducing vibrations in the membrane,
wherein the exciter and membrane are configured to produce sound in the space so as to mask human voices in the space.

An advantage of the apparatus according to the first aspect is that a more secure environment for custody or prison cells is provided, for example, because unauthorized communication between detained or imprisoned persons held in different cells is prevented. An advantage of the apparatus according to the first aspect is that unauthorized communication between detained or imprisoned persons in different cells is prevented or blocked. An advantage of the apparatus according to the first aspect is an improved system or structure for conveying wastewater.

According to an advantageous embodiment of the apparatus according to the first aspect, the apparatus comprises a control arrangement for producing and providing one or more drive signals to the exciter. An advantage of this embodiment is that the system or structure for conveying wastewater is further improved.

According to a further advantageous embodiment of the apparatus according to the first aspect, the exciter and membrane are configured to produce sound in the space so as to cancel or mask human-generated sounds propagating in the space. An advantage of this embodiment is that the system or structure for conveying wastewater is further improved. An advantage of this embodiment is that the security of the environment for custody or prison cells is further improved.

According to another advantageous embodiment of the apparatus according to the first aspect, the membrane is configured to cover the opening formed by the structure. An advantage of this embodiment is that the system or structure for conveying wastewater is further improved. An advantage of this embodiment is that the apparatus can in an uncomplicated manner replace a conventional cover covering the opening, wherein the conventional cover is opened to inspect and/or clear or cleanse the space of the structure. By way of the apparatus according to the first aspect, inspection and/or clearing of the space of the structure may continue in an easy manner.

According to yet another advantageous embodiment of the apparatus according to the first aspect, the apparatus comprises an acoustic shield for reducing sound to the ambient outside the space. An advantage of this embodiment is that the system or structure for conveying wastewater is further improved.

According to still another advantageous embodiment of the apparatus according to the first aspect, the sealing comprises a first annular sealing member, wherein the first annular sealing member is configured for abutment with the membrane and with the structure. An advantage of this embodiment is that the system or structure for conveying wastewater is further improved.

According to an advantageous embodiment of the apparatus according to the first aspect, the first annular sealing member is configured to allow high motion of the membrane and configured to insulate or dampen vibrations from the membrane to the structure. An advantage of this embodiment is that the system or structure for conveying wastewater is further improved. An advantage of this embodiment is that the security of the environment for custody or prison cells is further improved.

According to a further advantageous embodiment of the apparatus according to the first aspect, the apparatus comprises a holder attachable to the structure, wherein the holder is configured to hold the membrane to cover the opening. An advantage of this embodiment is that the system or structure for conveying wastewater is further improved.

According to another advantageous embodiment of the apparatus according to the first aspect, the apparatus comprises a second annular sealing member, wherein the second annular sealing member is positioned between the holder and the membrane. An advantage of this embodiment is that the system or structure for conveying wastewater is further improved.

According to yet another advantageous embodiment of the apparatus according to the first aspect, the second annular sealing member is configured for abutment with the membrane and with the holder.

According to still another advantageous embodiment of the apparatus according to the first aspect, the second annular sealing member is configured to allow high motion of the membrane and configured to insulate or dampen vibrations from the membrane to one or more of the structure and holder. An advantage of this embodiment is that the system or structure for conveying wastewater is further improved. An advantage of this embodiment is that the security of the environment for custody or prison cells is further improved.

According to a further advantageous embodiment of the apparatus according to the first aspect, the holder is configured to hold one or more of the first and second annular sealing members. An advantage of this embodiment is that the system or structure for conveying wastewater is further improved.

According to another advantageous embodiment of the apparatus according to the first aspect, the holder comprises a housing at least partly housing the exciter. An advantage of this embodiment is that the system or structure for conveying wastewater is further improved.

According to still another advantageous embodiment of the apparatus according to the first aspect, the housing comprises a casing and a cover, wherein the cover is attachable to the casing. An advantage of this embodiment is that the system or structure for conveying wastewater is further improved.

According to yet another advantageous embodiment of the apparatus according to the first aspect, the casing comprises a first end portion forming a first opening toward the membrane, wherein the casing comprises a second end portion forming a second opening, and wherein the cover is configured to cover the second opening of the casing. An advantage of this embodiment is that the system or structure for conveying wastewater is further improved.

According to an advantageous embodiment of the apparatus according to the first aspect, one or more of the housing, casing and cover forms/form an acoustic shield for reducing sound to the ambient outside the space. An advantage of this embodiment is that the system or structure for conveying wastewater is further improved. An advantage of this embodiment is that the security of the environment for custody or prison cells is further improved.

According to a further advantageous embodiment of the apparatus according to the first aspect, the exciter is attached, or attachable, to the membrane.

According to another advantageous embodiment of the apparatus according to the first aspect, the apparatus comprises one or more vibration sensors for detecting the motion of the membrane. An advantage of this embodiment is that the system or structure for conveying wastewater is further improved. An advantage of this embodiment is that the security of the environment for custody or prison cells is further improved.

According to yet another advantageous embodiment of the apparatus according to the first aspect, wherein the exciter and membrane are configured to produce sound imitating the sound of flowing water. An advantage of this embodiment is that the system or structure for conveying wastewater is further improved. An advantage of this embodiment is that the security of the environment for custody or prison cells is further improved.

According to still another advantageous embodiment of the apparatus according to the first aspect, the membrane is configured to at least partly cover an opening formed by a structure comprising one or more of the group of a basin having a water lock and a toilet having a water lock, and
wherein the apparatus comprises a detector for detecting one or more of the group of:
- the presence of water in the water lock;
- the lack of water in the water lock; and
- the absence of water in the water lock.

An advantage of this embodiment is that the system or structure for conveying wastewater is further improved. An advantage of this embodiment is that the security of the environment for custody or prison cells is further improved.

According to an advantageous embodiment of the apparatus according to the first aspect, the apparatus comprises a sensor unit for detecting sound in one or more of the space and structure. An advantage of this embodiment is that the system or structure for conveying wastewater is further improved. An advantage of this embodiment is that the security of the environment for custody or prison cells is further improved.

According to a second aspect of the invention, the above mentioned and other objects are achieved with a method for producing sound in a space for conveying wastewater formed by a structure forming an opening, wherein the method comprises:
inducing vibrations in a membrane by way of an exciter, the membrane at least partly covering the opening formed by the structure; and
controlling the exciter and membrane to produce sound in the space so as to mask human voices in the space.

Advantages of the method according to the second aspect correspond to the above- or below-mentioned advantages of the apparatus according to the first aspect and its embodiments.

According to an advantageous embodiment of the method according to the second aspect, the method comprises:
producing and providing one or more drive signals to the exciter.

According to a further advantageous embodiment of the method according to the second aspect, the method comprises:
controlling the exciter and membrane to produce sound in the space so as to cancel or mask human-generated sounds propagating in the space.

According to another advantageous embodiment of the method according to the second aspect, the method comprises acoustically shielding sound to the ambient outside the space.

According to yet another advantageous embodiment of the method according to the second aspect, the method comprises:
allowing high motion of the membrane; and
insulating or dampening vibrations from the membrane to the structure.

According to still another advantageous embodiment of the method according to the second aspect, the method comprises detecting one or more of the group of:
- the motion of the membrane; and
- sound in one or more of the space and structure.

According to an advantageous embodiment of the method according to the second aspect, the method comprises:
monitoring one or more of the group of:
   - the presence of water in a water lock;
   - the lack of water in a water lock; and
   - the absence of water in a water lock.

According to a further advantageous embodiment of the method according to the second aspect, the method comprises:
controlling the exciter and membrane to produce sound imitating the sound of flowing water.

According to a third aspect of the invention, the above mentioned and other objects are achieved with a computer program comprising instructions which, when the program is executed by a computer, cause the computer to carry out the method according to any one of the embodiments disclosed above or below. Advantages of the computer program according to the third aspect correspond to the above- or below-mentioned advantages of the method according to the second aspect and its embodiments.

According to a fourth aspect of the invention, the above mentioned and other objects are achieved with a computer-readable medium comprising instructions which, when the instructions are executed by a computer, cause the computer to carry out the method according to any one of the embodiments disclosed above or below. Advantages of the computer-readable medium according to the fourth aspect correspond to the above- or below-mentioned advantages of the method according to the second aspect and its embodiments.

According to an aspect of the present invention, the above-mentioned computer program and/or the computer-readable medium are/is configured to implement the method and its embodiments described herein.

According to a fifth aspect of the invention, the above mentioned and other objects are achieved with a control arrangement for producing sound in a space for conveying wastewater formed by a structure forming an opening, wherein the control arrangement is configured to:
induce vibrations in a membrane by way of an exciter, the membrane at least partly covering the opening formed by the structure; and
control the exciter and membrane to produce sound in the space so as to mask human voices in the space.

Advantages of the control arrangement according to the fifth aspect correspond to the above- or below-mentioned advantages of the method according to the second aspect and its embodiments.

According to an advantageous embodiment of the control arrangement according to the fifth aspect, the control arrangement is configured to:
produce and provide one or more drive signals to an exciter.

It is to be appreciated that all the embodiments described for the method aspects of the invention are applicable also to the control arrangement aspects of the invention. Thus, all embodiments described for the method aspects of the invention may be performed by the control arrangement, which may include one or more control units, or one or more control devices. As mentioned above, the control arrangement and its embodiments have advantages corresponding to the advantages mentioned above for the method and its embodiments.

According to a sixth aspect of the invention, the above mentioned and other objects are achieved with an installation comprising a structure,
wherein the structure forms a space for conveying wastewater and forms an opening which opens to the space, and
wherein the installation comprises one or more of the group of:
   - an apparatus according to any one of the embodiments mentioned above or below; and
   - a control arrangement according to any one of the embodiments mentioned above or below.

Advantages of the installation according to the sixth aspect correspond to the above- or below-mentioned advantages of the apparatus according to the first aspect and its embodiments.

The above-mentioned features and embodiments of the apparatus, the method, the computer program, the computer-readable medium, the control arrangement and the installation, respectively, may be combined in various possible ways providing further advantageous embodiments.

Further advantageous embodiments of the apparatus, the method, the computer program, the computer-readable medium, the control arrangement and the installation according to the present invention and further advantages with the embodiments of the present invention emerge from the detailed description of embodiments.

### Brief Description of the Drawings

Embodiments of the invention will now be illustrated, for exemplary purposes, in more detail by way of embodiments and with reference to the enclosed drawings, where similar references are used for similar parts, in which:
- Figure 1: is a schematic perspective view of an embodiment of the apparatus according to the first aspect of the invention, with a cover separated from a casing;
- Figure 2: is a schematic exploded perspective view of the apparatus of figure 1;
- Figure 3: is a schematic exploded side view of the apparatus of figure 1;
- Figure 4: is a schematic side view of the apparatus of figure 1;
- Figure 5A: is a schematic top view of the apparatus of figure 4;
- Figure 5B: is a schematic bottom view of the apparatus of figure 4;
- Figure 6: is a schematic front view of a structure to which embodiments of the apparatus may be applied;
- Figure 7: is a schematic sectional side view of the structure of figure 6 and of an embodiment of the installation according to the sixth aspect of the invention;
- Figure 8: is a schematic sectional side view of an embodiment of the installation according to the sixth aspect of the invention;
- Figure 9: is a schematic flow chart illustrating aspects of embodiments of the method according to the second aspect of the invention;
- Figure 10: is another schematic flow chart illustrating further aspects of embodiments of the method according to the second aspect of the invention;
- Figure 11: is another schematic flow chart illustrating further aspects of embodiments of the method according to the second aspect of the invention; and
- Figure 12: is a schematic diagram illustrating an embodiment of the control arrangement according to the fifth aspect of the invention, in which a method according to any one of the herein described embodiments may be implemented.

### Detailed Description

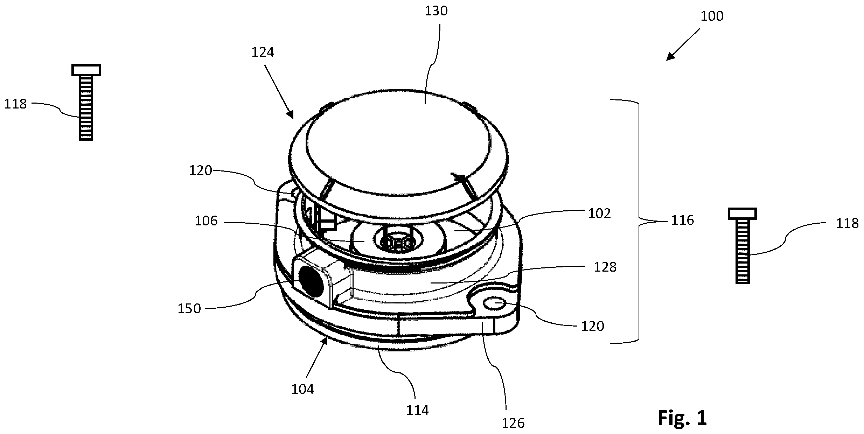

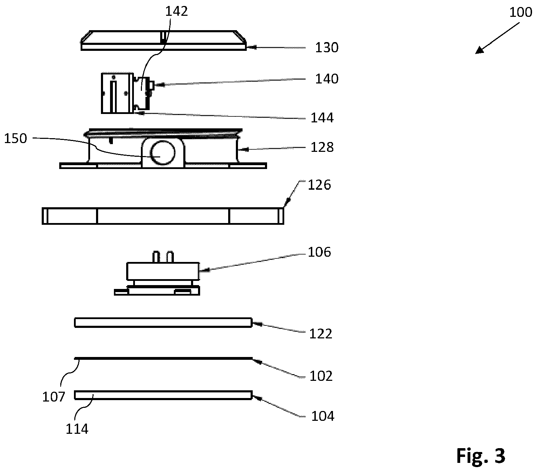

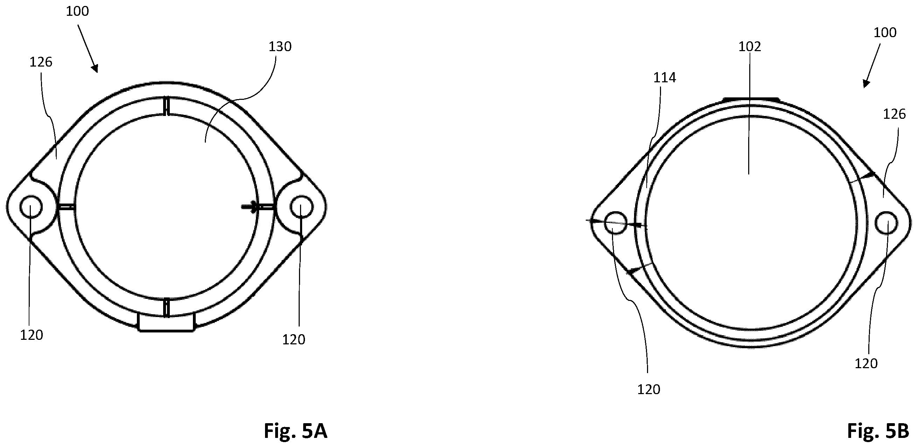

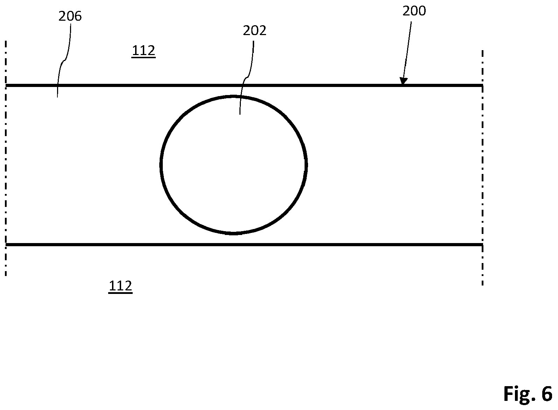

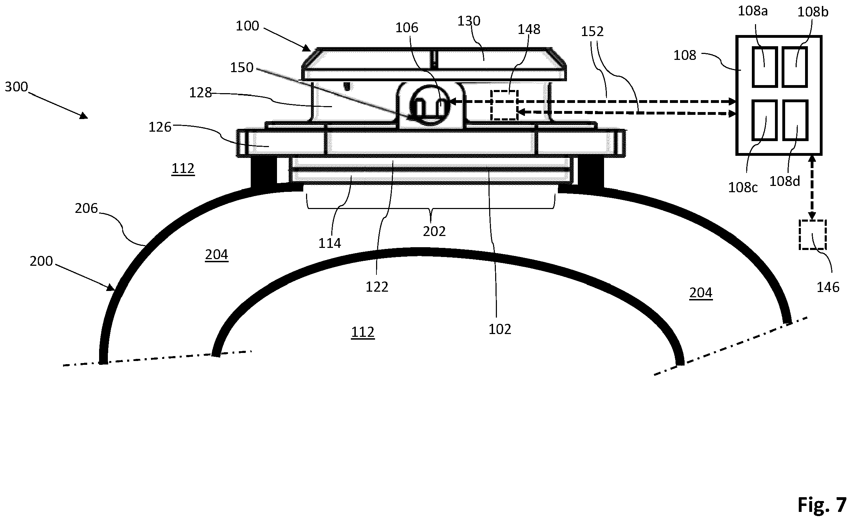

With reference to figures 1 to 8, aspects of embodiments of the apparatus 100 according to the first aspect of the invention are schematically illustrated. The apparatus 100 includes a membrane 102 for at least partly covering an opening 202 (see figures 6 to 8) formed, or defined, by a structure 200 (see figures 6 to 8). The structure 200 also forms, or defines, a space 204 for conveying or transporting wastewater, or sewage (see figure 7). With reference to figure 7, the opening 202 opens to the space 204. The apparatus 100 includes one or more sealings 104 for sealing between the membrane 102 and the structure 200 (see figure 7). The apparatus 100 includes an exciter 106 for inducing, or producing, vibrations in, or to, the membrane 102. For some embodiments, the exciter 106 may be referred to as a structural exciter 106.

For some embodiments, the membrane 102 may comprise, or may be described as, a diaphragm, a partition, a sheet 107, or a plate. The sheet 107, or plate, may be made of a material comprising or consisting of a metal or a metal alloy, for example, stainless steel. However, the membrane 102 may be made from other materials, such as a material comprising or consisting of a polymer or a polymer composite. The membrane 102, or the sheet 107, may have a region, or area, with a thickness in the range of 0.25 to 2 mm, for example, a central region of the membrane 102. The region, or the central region, may be a major portion of the membrane 102. The structure 200 may include one or more pipes 206 forming said space 204. For some embodiments, the exciter 106 may comprise an electroacoustic transducer and/or a coil, such as a coil of wire capable of moving axially, for example in a cylindrical gap containing a magnetic field produced by a magnet, such as by a permanent magnet. In general, the coil is forced to move back and forth due to Faraday's law of induction. However, other types of exciters are possible, such as piezoelectric exciters etc.

With reference to figures 1 to 8, the exciter 106 and membrane 102 are configured to produce sound in the space 204 so as to mask human voices in the space 204. For some embodiments, the exciter 106 and membrane 102 may be configured to produce sound in the space 204 so as to cancel or mask human-generated sounds, such as morse code, propagating in the space 204. For some embodiments, the produced sound may be described as noise sound. For some embodiments, the sound may be described as sound waves. For some embodiments, it may be defined that the apparatus 100 is configured to radiate sound or sound waves.

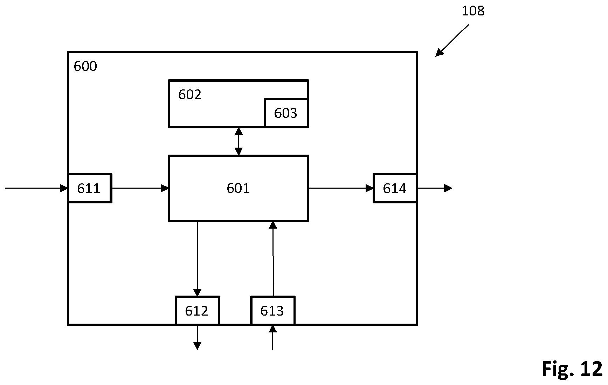

With reference to figures 7 and 12, for some embodiments, the apparatus 100 may include a control arrangement 108 for producing (or generating) and providing (or applying) one or more drive signals, such as one or more electrical signals, driving signals, or control signals, to the exciter 106, so as to control the exciter 106, and thus control the membrane 102, and/or control the movement or vibrations of the membrane 102. The control arrangement 108 may be described to be configured to control the exciter 106. The exciter 106 may be described to be configured to control the membrane 102. Aspects of the control arrangement 108 are disclosed in further detailed hereinbelow in connection with figures 7 and 12.

With reference to figure 7, for some embodiments, the membrane 102 is configured to cover the opening 202 formed by the structure 200. For other embodiments, one or more other members, such as the sealing, may cover part of the opening 202, i.e., the membrane 102 may together with said one or more other members, such as the sealing, cover the opening 202.

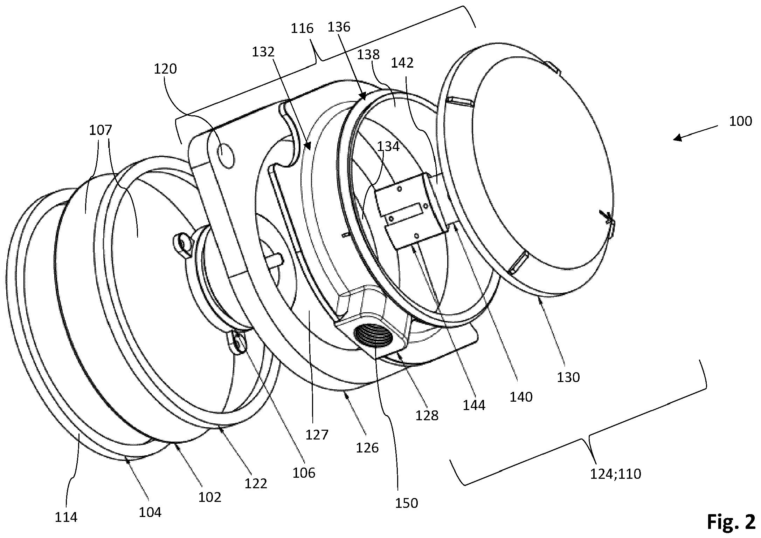

With reference to figure 2, for some embodiments, the apparatus 100 may comprise an acoustic shield 110 for reducing sound to the ambient 112 outside the space 204, or outside the structure 200. With reference to figures 1 to 8, for some embodiments, one or more of the housing 124, casing 128 and cover 130 may form an acoustic shield 110 for reducing sound to the ambient 112 outside the space 204, or outside the structure 200.

With reference to figures 1 to 8, for some embodiments, the sealing 104 may include a first annular sealing member 114. The first annular sealing member 114 is configured for abutment with (or is configured to abut, or abuts, against) the membrane 102 and with the structure 200. For some embodiments, it may be described that the first annular sealing member 114 is configured for contact with the membrane 102 and with the structure 200. However, other types of sealings 104, different from the first annular sealing member 114, are possible. The first annular sealing member 114 may be configured to allow high motion of the membrane 102 and may be configured to insulate or dampen vibrations from the membrane 102 to the structure 200. One or more of the sealing 104 and first annular sealing member 114 may be described to extend around the opening 202.

With reference to figures 1 to 7, for some embodiments, the apparatus 100 may include a holder 116 attachable to the structure 200. The holder 116 is configured to hold the membrane 102 to cover the opening 202. With reference to figure 1, the holder 116 may be attachable to the structure 200 by way of one or more attachment elements 118, such as one or more screws, bolts and nuts, one or more through-holes 120 formed by the holder 116, for example provided with one or more threads, and/or one or more clamps, or other means of attachment.

For some embodiments, it may be defined that the apparatus 100, or the holder 116, holds or positions, or is configured to hold, the membrane 102 between the exciter 106 and the opening 202 of the structure 200, so as to position the exciter 106 outside the space 204 of the structure 200. Hereby, the exciter 106 is efficiently protected from the wastewater conveyed in the space 204. For some embodiments, it may be defined that the membrane 102 is positioned, or configured to be positioned, between the exciter 106 and the opening 202 of the structure 200.

With reference to figures 1 to 5B and 7, for some embodiments, the apparatus 100 may include a second annular sealing member 122. The second annular sealing member 122 is positioned between the holder 116 and the membrane 102. The second annular sealing member 122 may be configured for abutment with (or configured to abut, or abuts, against) the membrane 102 and with the holder 116. The second annular sealing member 122 may be configured to allow high motion of the membrane 102 and may be configured to insulate or dampen vibrations from the membrane 102 to one or more of the structure 200 and holder 116. For some embodiments, the holder 116 may be configured to hold one or more of the first and second annular sealing members 114, 122. For example, for some embodiments, the holder 116 may have one or more recesses, for example an annular recess, for holding the second annular sealing member 122. For some embodiments, one or more of the first and second annular sealing members 114, 122 may be made of a material comprising or consisting of a polymer or a polymer composite, such as an elastomer, or rubber. However, other materials are possible. One or more of the first and second annular sealing members 114, 122 may be circular or oval, and may, for example, comprise an O-ring.

With reference to figures 1 to 7, for some embodiments, the holder 116 may include a housing 124 at least partly housing the exciter 106. For some embodiments, the housing 124 may be made of a material comprising or consisting of a polymer or a polymer composite. However, other materials are possible. The holder 116 may include a frame 126. The frame 126 may form a central opening 127 (see figure 2), which may be circular, or any other shape. The frame 126 may form the one or more through-holes 120 of the holder 116. The second annular sealing member 122 may be positioned between the frame 126 and the membrane 102. The frame 126 of the holder 116 may be made of a material comprising or consisting of a metal or a metal alloy. However, other materials are possible. For some embodiments, the housing 124 may include a casing 128 and a cover 130. The cover 130 is attachable to the casing 128, for example, by way one or more of the group of: a thread attachment; a friction attachment; a positive locking attachment; a bayonet attachment; a snap-on attachment; and a snap-in attachment. However, other attachments are possible. In the embodiment illustrated in the figures, the cover 130 is attachable to the casing 128 by way of a thread attachment.

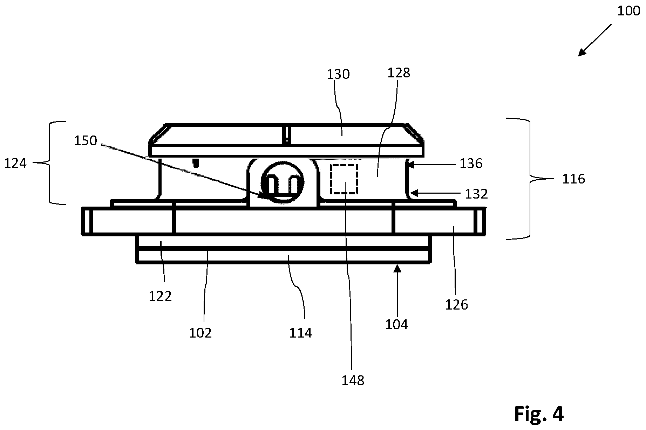

With reference to figures 2 and 4, for some embodiments, the casing 128 may have a first end portion 132 forming a first opening 134 toward the membrane 102. The casing 128 may have a second end portion 136 forming a second opening 138, for example in a direction away from the membrane 102, wherein the cover 130 may be configured to cover the second opening 138 of the casing 128.

With reference to figures 1 to 7, for some embodiments, the exciter 106 may be attached, or attachable, to the membrane 102, such as mechanically connected to the membrane 102, for example, by way one or more of the group of: an adhesive, such as glue; a thread attachment; a friction attachment; a positive locking attachment; a bayonet attachment; a snap-on attachment; and a snap-in attachment. However, other attachments are possible. For some embodiments, the exciter 106 may be attached, or attachable, to the membrane 102 such that the membrane 102 is positioned between the exciter 106 and the opening 202 of the structure 200, so as to position the exciter 106 outside the space 204 of the structure 200.

With reference to figures 1 to 7, for some embodiments, the apparatus 100 may include one or more vibration sensors 140 for detecting, or sensing, the motion of the membrane 102. The vibration sensor 140 may comprise a microphone 142, for example, held by a microphone holder 144. However, for other embodiments, the vibration sensor 140 may include an accelerometer, such as a piezoelectric accelerometer, or a strain gauge. However, other accelerometers or vibration sensors 140 are possible. For some embodiments, it may be defined that the membrane 102 is positioned, or configured to be positioned, between the vibration sensor 140 and the opening 202 of the structure 200, so as to position the vibration sensor 140 outside the space 204 of the structure 200. Hereby, the vibration sensor 140 is efficiently protected from the wastewater conveyed in the space 204 of the structure 200.

It is to be understood that in some embodiments, one or more of the vibration sensor 140, microphone 142 and microphone holder 144 may be excluded. The same applies for other optional features.

With reference to figures 1 to 7, for some embodiments, the exciter 106 and membrane 102, and optionally the control arrangement 108, may be configured to produce sound imitating the sound of flowing water.

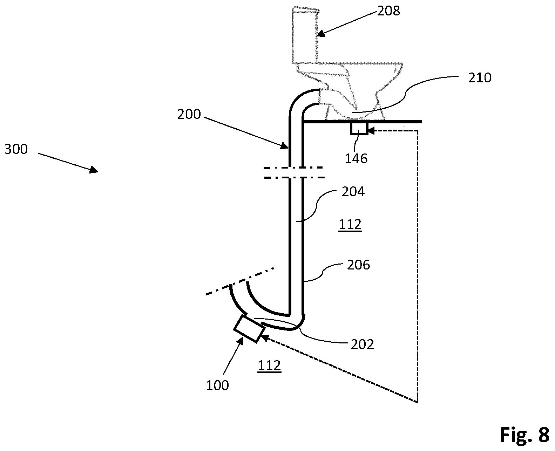

With reference to figures 1 to 8, for some embodiments, the membrane 102 is configured to at least partly cover an opening 202 formed by a structure 200, which comprises one or more of the group of a basin and a toilet 208, each having a water lock 210. With reference to figure 8, the apparatus 100 may include a detector 146 for detecting one or more of the group of: the presence of water in the water lock 210; the lack of water in the water lock 210; and the absence of water in the water lock 210. For some embodiments, the vibration sensor 140 or the microphone 142 may be configured to detect when the water lock 210 is emptied.

With reference to figure 4, for some embodiments, the apparatus 100 may include a sensor unit 148 for detecting, or sensing, sound (or sound waves), for example, human voices, in one or more of the space 204 and structure 200. With reference to figures 1 to 4 and 7, one or more of the housing 124 and casing 128 may form a through-hole 150 for one or more cables or lines, such as electrical and/or signal lines 152, for the connection to one or more of the exciter 106, vibration sensor 140, detector 146, and sensor unit 148 and/or for the connection to the control arrangement 108, for example, for communication and/or electric power.

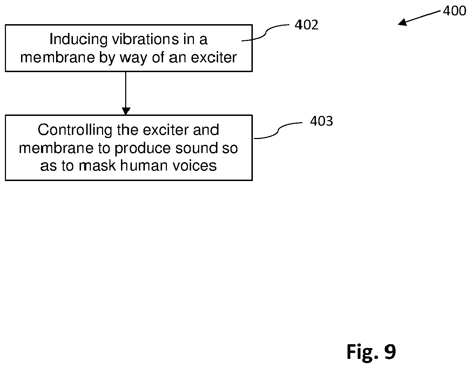

With reference to figures 9 to 11, aspects of embodiments of the method 400 for producing sound in a space 204 for conveying wastewater formed by a structure 200, which forms an opening 202, according to the second aspect of the invention are schematically illustrated.

With reference to figure 9, the method 400 includes the steps of:
- inducing 402 (or producing) vibrations in (or to) a membrane 102 by way of an exciter 106, wherein the membrane 102 at least partly covers the opening 202 formed by the structure 200; and
- controlling 403 the exciter 106 and membrane 102 to produce sound in the space 204 so as to mask human voices in the space 204. For some embodiments, the method may also include the step of controlling 403 the exciter 106 and membrane 102 to produce sound in the space 204 so as to cancel or mask human-generated sounds, such as morse code, propagating in the space 204.

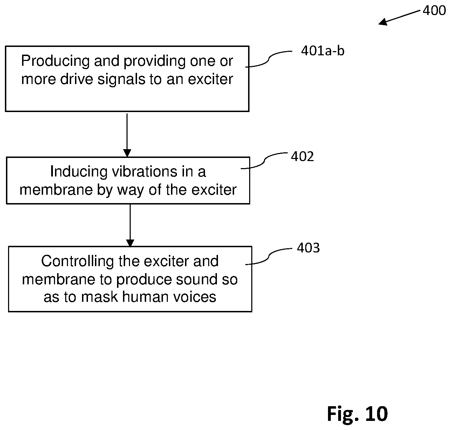

With reference to figure 10, some embodiments of the method 400 may include the steps of:
- producing 401a (or generating) and providing 401b (or applying) one or more drive signals, such as one or more electrical signals, driving signals, or control signals, to an exciter 106, so as to control the exciter 106;
- inducing 402 vibrations in a membrane 102 by way of the exciter 106, such as based on the one or more drive signals, wherein the membrane 102 at least partly covers the opening 202 formed by the structure 200; and
- controlling 403 the exciter 106 and membrane 102, such as based on the one or more drive signals, to produce sound in the space 204 so as to mask human voices in the space 204. For some embodiments, the method may also include the step of controlling 403 the exciter 106 and membrane 102, based on the one or more drive signals, to produce sound in the space 204 so as to cancel or mask human-generated sounds propagating in the space 204.

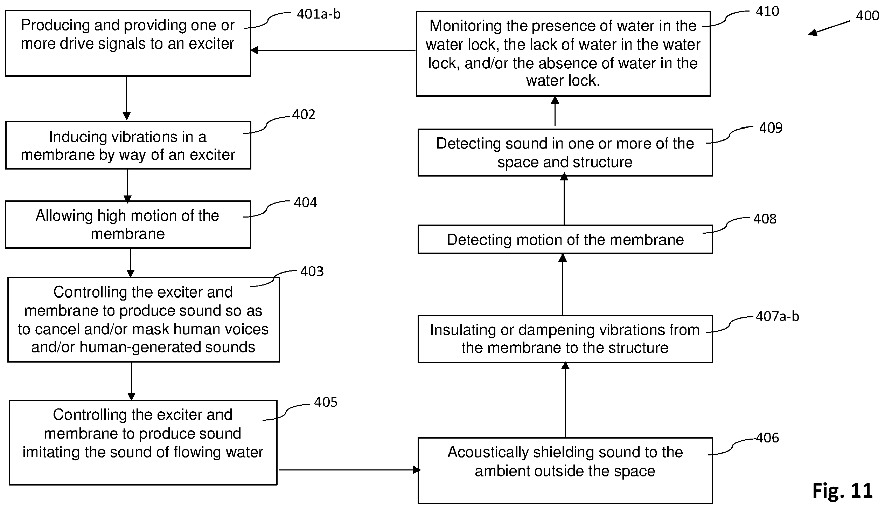

With reference to figure 11, some embodiments of the method 400 may include one or more of the steps of:
- producing 401a and providing 401b one or more drive signals to an exciter 106;
- inducing 402 vibrations in a membrane 102 by way of the exciter 106, wherein the membrane 102 at least partly covers the opening 202 formed by the structure 200;
- allowing 404 high motion of the membrane 102;
- controlling 403 the exciter 106 and membrane 102 (and/or controlling the drive signal) to produce sound in the space 204 so as to mask human voices in the space 204;
- controlling 405 the exciter 106 and membrane 102 to produce sound imitating the sound of flowing water;
- acoustically shielding 406 sound to the ambient 112 outside the space 204, i.e., outside the structure 200;
- insulating 407a and/or dampening 407b vibrations from the membrane 102 to the structure 200;
- detecting 408 (or sensing) motion of the membrane 102;
- detecting 409 (or sensing) sound (or sound waves) in one or more of the space 204 and structure 200; and
- monitoring 410 one or more of the group of: the presence of water in a water lock 210; the lack of water in a water lock 210; and the absence of water in a water lock 210.

Unless disclosed otherwise, it should be noted that the method steps illustrated in figures 9 to 11 and described herein do not necessarily have to be executed in the order illustrated in figures 9 to 11. The steps may essentially be executed in any suitable order. Further, one or more steps may be added without departing from the scope of the appended claims. One or more steps may be excluded without departing from the scope of the appended claims.

For some embodiments, the apparatus 100 and/or method 400 may continuously produce sound (for example, sound imitating the sound of flowing water) that masks any human voices in the space 204 irrespective of the actual presence of human voices. Thus, for some embodiments, a sensor unit 148, such as the one of the above-mentioned embodiment, is not needed for all embodiments falling within the scope of the independent claims.

With reference to figures 7 and 12, aspects of embodiments of the control arrangement 108 according to the fifth aspect, are schematically illustrated. Embodiments of the control arrangement 108 are configured to:
- induce 402 vibrations in a membrane 102 by way of an exciter 106, the membrane 102 at least partly covering the opening 202 formed by the structure 200; and
- control 403 the exciter 106 and membrane 102 to produce sound in the space 204 so as to mask human voices in the space 204.

With reference to figure 7, the illustrated embodiment of the control arrangement 108 includes a drive signal production unit 108a for producing and providing one or more drive signals to the exciter 106 in order to perform steps 401a-b in figures 10 and 11. For some embodiments, the control arrangement 108 includes a controller unit 108b for controlling the exciter 106 and thus for controlling the membrane 102 in order to perform steps 402, 403, 404 and 405 in figures 9 to 11. For some embodiments, the control arrangement 108 includes a detection unit 108c for detecting, or sensing, one or more of the group of: motion of the membrane 102; and sound in one or more of the space 204 and structure 200, in order to perform steps 408 and 409 in figure 11. For some embodiments, the control arrangement 108 includes a monitoring unit 108d for monitoring one or more of the group of: the presence of water in the water lock 210; the lack of water in the water lock 210; and the absence of water in the water lock 210, in order to perform step 410 in figure 11.

With reference to figures 2 and 7, in some embodiments, the control arrangement 108 may be configured to directly or indirectly communicate, for example via signal lines 152 (or cables or wires) or wirelessly, with one or more of the group of: an exciter 106; a vibration sensor 140; a detector 146; and a sensor unit 148. Thus, in some embodiments, there may be one or more signal connections between the control arrangement 108 and one or more of the group of: an exciter 106; a vibration sensor; 140 a detector 146; and a sensor unit 148.

Figure 12 shows in schematic representation an embodiment of the control arrangement 108 according to the fifth aspect of the invention, which may include a control unit 600, which may correspond to or may include one or more of the above-mentioned units 108a-d of the control arrangement 108. The control unit 600 may comprise a computing unit 601, which can be constituted by essentially any suitable type of processor or microcomputer, for example a circuit for digital signal processing (Digital Signal Processor, DSP), or a circuit having a predetermined specific function (Application Specific Integrated Circuit, ASIC). The computing unit 601 is connected to a memory unit 602 arranged in the control unit 600. The memory unit 602 provides the computing unit 601 with, for example, the stored program code and/or the stored data which the computing unit 601 requires to be able to perform computations. The computing unit 601 is also arranged to store partial or final results of computations in the memory unit 602.

With reference to figure 6, in addition, the control unit 600 may be provided with devices 611, 612, 613, 614 for receiving and transmitting input and output signals. These input and output signals may contain waveforms, impulses, or other attributes which, by means of the devices 611, 613 for the reception of input signals, can be detected as information and can be converted into signals which can be processed by the computing unit 601. These signals are then made available to the computing unit 601. The devices 612, 614 for the transmission of output signals are arranged to convert signals received from the computing unit 601 in order to create output signals by, for example, modulating the signals, which can be transmitted to other parts of and/or systems.

Each of the connections to the devices for receiving and transmitting input and output signals can be constituted by one or more of a cable; a data bus, such as a CAN bus (Controller Area Network bus), a MOST bus (Media Orientated Systems Transport bus), or some other bus configuration; or by a wireless connection.

Here and in this document, units are often described as being provided for performing steps of the method 400 according to embodiments of the invention. This also includes that the units are designed to and/or configured to perform these method steps.

With reference to figures 7 and 12, the units 108a-d of the control arrangement 108 are in figure 7 illustrated as separate units. These units 108a-d may, however, be logically separated but physically implemented in the same unit, or can be both logically and physically arranged together. These units 108a-d may for example correspond to groups of instructions, which can be in the form of programming code, that are input into, and are utilized by a processor/computing unit 601 (see figure 12) when the units are active and/or are utilized for performing its method step.

With reference to figures 7 and 12, the control arrangement 108, which may include one or more control units 600, e.g. a device or a control device, according to embodiments of the present invention may be arranged to perform all of the method steps mentioned above, in the claims, and in connection with the herein described embodiments. The control arrangement 108 is associated with the above-described advantages for each respective embodiment.

With reference to figure 12, according to the third aspect of the invention, a computer program 603 is provided, comprising instructions which, when the program is executed by a computer, cause the computer to carry out the method 400 according to one or more of the embodiments disclosed above.

According to the fourth aspect of the invention, a computer-readable medium is provided, comprising instructions which, when the instructions are executed by a computer, cause the computer to carry out the method 400 according to one or more of the embodiments disclosed above.

The person skilled in the art will appreciate that the herein described embodiments of the method 400 according to the second aspect may be implemented in a computer program 603 (see figure 12), which, when it is executed in a computer, instructs the computer to execute the method 400. The computer program is usually constituted by a computer program product 603 stored on a non-transitory/non-volatile digital storage medium, in which the computer program is incorporated in the computer-readable medium of the computer program product. The computer-readable medium comprises a suitable memory, such as, for example: ROM (Read-Only Memory), PROM (Programmable Read-Only Memory), EPROM (Erasable PROM), Flash memory, EEPROM (Electrically Erasable PROM), a hard disk unit, etc.

A filter, such as a digital filter, for example, a finite impulse response (FIR) filter, may be applied when producing and providing said one or more drive signals to the exciter 106 in order to produce sound, such as sound imitating the sound of flowing water, in the space 204 so as to mask human voices in the space 204 and/or cancel or mask human-generated sounds propagating in the space 204.

With reference to the figures, an installation 300 comprising a structure 200 is also provided, wherein the structure 200 forms a space 204 for conveying wastewater and forms an opening 202 which opens to the space 204. The installation 300 includes one or more of the group of: an apparatus 100 according to any one of the embodiments disclosed above; and a control arrangement 108 according to any one of the embodiments disclosed above.

It is to be understood that embodiments of the apparatus 100 disclosed above may be applied to configurations, structures, different from the structure 200 and installation 300 schematically illustrated above.

The present invention is not limited to the above-described embodiments. Instead, the present invention relates to, and encompasses all different embodiments being included within the scope of the independent claims.

## Claims

1. An apparatus (100) comprising a membrane (102) for at least partly covering an opening (202) formed by a structure (200) forming a space (204) for conveying wastewater, wherein the opening (202) opens to the space (204),
wherein the apparatus (100) comprises one or more sealings (104) for sealing between the membrane (102) and the structure (200),
wherein the apparatus (100) comprises an exciter (106) for inducing vibrations in the membrane (102), and
wherein the exciter (106) and membrane (102) are configured to produce sound in the space (204) so as to mask human voices in the space (204).

2. An apparatus (100) according to claim 1, wherein the apparatus (100) comprises a control arrangement (108) for producing and providing one or more drive signals to the exciter (106).

3. An apparatus (100) according to any one of the claims 1 to 2, wherein the sealing (104) comprises a first annular sealing member (114), and
wherein the first annular sealing member (114) is configured for abutment with the membrane (102) and with the structure (200).

4. An apparatus (100) according to any one of the claims 1 to 3, wherein the apparatus (100) comprises a holder (116) attachable to the structure (200), and
wherein the holder (116) is configured to hold the membrane (102) to cover the opening (202).

5. An apparatus (100) according to claim 4, wherein the holder (116) comprises a housing (124) at least partly housing the exciter (106).

6. An apparatus (100) according to any one of the claims 1 to 5, wherein the apparatus (100) comprises one or more vibration sensors (140) for detecting the motion of the membrane (102).

7. An apparatus (100) according to any one of the claims 1 to 6, wherein the exciter (106) and membrane (102) are configured to produce sound imitating the sound of flowing water.

8. An apparatus (100) according to any one of the claims 1 to 7, wherein the apparatus (100) comprises a sensor unit (148) for detecting sound in one or more of the space (204) and structure (200).

9. A method (400) for producing sound in a space (204) for conveying wastewater formed by a structure (200) forming an opening (202), wherein the method comprises:
inducing (402) vibrations in a membrane (102) by way of an exciter (106), the membrane (102) at least partly covering the opening (202) formed by the structure (200); and
controlling (403) the exciter (106) and membrane (102) to produce sound in the space (204) so as to mask human voices in the space (204).

10. A method according to claim 9, wherein the method comprises:
producing (401a) and providing (401b) one or more drive signals to the exciter (106).

11. A method according to any one of the claims 9 to 10, wherein the method comprises detecting (408, 409) one or more of the group of:
• the motion of the membrane (102); and
• sound in one or more of the space (204) and structure (200).

12. A method according to any one of the claims 9 to 11, wherein the method comprises:
controlling (405) the exciter (106) and membrane (102) to produce sound imitating the sound of flowing water.

13. A computer program (603) comprising instructions which, when the program is executed by a computer, cause the computer to carry out the method according to any one of the claims 9 to 12.

14. A control arrangement (108) for producing sound in a space (204) for conveying wastewater formed by a structure (200) forming an opening (202), wherein the control arrangement (108) is configured to:
induce (402) vibrations in a membrane (102) by way of an exciter (106), the membrane (102) at least partly covering the opening (202) formed by the structure (200); and
control (403) the exciter (106) and membrane (102) to produce sound in the space (204) so as to mask human voices in the space (204).

15. An installation (300) comprising a structure (200),
wherein the structure (200) forms a space (204) for conveying wastewater and forms an opening (202) which opens to the space (204), and
wherein the installation (300) comprises one or more of the group of:
• an apparatus (100) according to any one of the claims 1 to 8; and
• a control arrangement (108) according to claim 14.
